# EUROPÄISCHE PATENTSCHRIFT

(11) **EP 0 624 408 B1**
(45) Veröffentlichungstag und Bekanntmachung des Hinweises auf die Patenterteilung: **10.06.1998**
(21) Anmeldenummer: 94102144.6
(22) Anmeldetag: 11.02.1994
(51) Int. Cl.: B09B 3/00, A62D 3/00, C02F 3/34

(54) **Verfahren zur Abtrennung von Schwermetallen**
Method of separating heavy metals
Procédé pour la séparation de métaux lourds

(30) Priorität: 13.02.1993 DE 4304446
(43) Veröffentlichungstag der Anmeldung: 17.11.1994
(73) Patentinhaber: Friedmann, Hans, Dr.-Ing., D-85293 Reichertshausen (DE)
(72) Erfinder: Friedmann, Hans, Dr.-Ing., D-85293 Reichertshausen (DE)
(74) Vertreter: Strasse, Joachim, Dipl.-Ing.

(56) Entgegenhaltungen:
- DE-A- 3 938 464
- DE-A- 4 013 552
- DE-A- 4 117 515

## Beschreibung

Die vorliegende Erfindung betrifft ein Verfahren zur Abtrennung von Schwermetallen aus kontaminierten Material, insbesondere aus dispersen Feststoffen, Böden, organischen Abfällen, Klärschlamm und dergleichen.

Mit Schwermetallen kontaminierte Materialien stellen ein hohes Gesundheitsrisiko für den Menschen dar. Insbesondere dann, wenn der Mensch Schwermetalle aus kontaminierten Böden über die Nahrungskette im Körper aufnimmt. Um mögliche Gesundheitsschäden zu vermeiden, ist es daher notwendig Schwermetalle aus diesen Materialien abzutrennen und gesondert zu entsorgen.

Bei bekannten Verfahren zur Abtrennung von Schwermetallen aus kontaminierten Materialien, werden den Materialien Zuschlagstoffe wie anorganische Säuren oder Laugen bzw. Fällungshilfsmittel zugesetzt. Die Schwermetalle werden dabei aus dem Material gelöst und bilden mit den Zuschlagstoffen neue, schwerlösliche Verbindungen. Anschließend werden die Schwermetallverbindungen abgetrennt.

Nachteilig an diesem Stand der Technik ist jedoch, daß die verwendeten Zuschlagstoffe nicht abbaubar, insbesondere nicht biologisch abbaubar, sind und somit große Mengen an hochkonzentrierten schwermetallhaltigen Rückständen anfallen.

Aufgabe der Erfindung ist es, ein Verfahren zur Abtrennung von Schwermetallen aus kontaminiertem Material, insbesondere aus dispersen Feststoffen, Böden, organischen Abfällen, Klärschlamm und dergleichen, bereitzustellen, welches eine möglichst vollständige Abtrennung der Schwermetalle unter Verwendung von weitgehend rückstandsfreien Substanzen gewährleistet.

Zur Lösung dieser Aufgabe dienen die Merkmale des unabhängigen Anspruches.

Vorteilhafte Ausgestaltungen sind in den Unteransprüchen beschrieben.

Bei dem erfindungsgemäßen Verfahren wird auf die Verwendung und Zugabe von biologisch nicht abbaubaren Zuschlagstoffen in ein zu dekontaminierendes Material verzichtet, so daß nach der Dekontaminierung nur geringe Mengen an hochkonzentrierten schwermetallhaltigen Rückständen anfallen.

Erfindungsgemäß werden abbaubare organische Substanzen und Wasser in das mit Schwermetallen kontaminierte Material gegeben, wobei durch Mischen eine annähernd homogene Suspension entsteht. Unter Sauerstoffabschluß bilden sich mit Hilfe von Mikroorganismen aus den organischen Substanzen organischen Säuren, wodurch ein Absenken des pH-Wertes der Suspension erreicht wird und vorteilhafterweise die Löslichkeit der Schwermetalle erhöht wird. Dadurch ist eine Überführung der Schwermetalle in eine wässrige Phase möglich, die einfach von dem nunmehr überwiegend schwermetallfreien Material abgetrennt werden kann.

In einer weiteren vorteilhaften Ausgestaltung des erfindungsgemäßen Verfahrens wird das Absenken des pH-Wertes zur Mobilisierung der Schwermetalle durch Druckerhöhung erreicht. Diese pH-Wertabsenkung ist auf die höhere Löslichkeit des von den Mikroorganismen gebildeten Kohlendioxids zurückzuführen.

In einer weiteren vorteilhaften Ausgestaltung des erfindungsgemäßen Verfahrens werden die kontaminierten Materialien vor der Zugabe abbaubarer organischer Substanzen und Wasser einem thermischen, mechanischen, chemischen oder biochemischen Zellaufschlußverfahren unterzogen. Durch die Zerstörung der Zellen von Mikroorganismen des zu bearbeitenden biologischen Klärschlamms wird die nachfolgende Schwermetalltrennung erleichtert.

Nach dem erfindungsgemäßem Einbringen der schwermetallhaltigen wässrigen Phase in einen Biogasreaktor wird die Löslichkeit der Schwermetalle in der wässrigen Phase vorteilhafterweise durch biologischen Abbau unter Sauerstoffausschluß der sich in den vorhergehenden Verfahrensschritten gebildeten organischen Säuren erniedrigt. Die sich bildenden schwerlöslichen Schwermetallverbindungen können leicht von der jetzt schwermetallfreien wässrigen Phase abgetrennt werden.

Durch den biologischen Abbau der für die Dekontamination benötigten Zuschlagstoffe ist gewährleistet, daß nach der Dekontaminierung des Materials nur geringe Mengen an hochkonzentrierten schwermetallhaltigen Rückständen anfallen.

Vorteilhafterweise kann nach dem Abtrenn- bzw. Dekontaminationsvorgang die schwermetallfreie wässrige Phase wiederverwendet werden.

Weitere Einzelheiten, Merkmale und Vorteile ergeben sich aus der folgenden Beschreibung eines zeichnerisch dargestellten Ausführungsbeispieles.

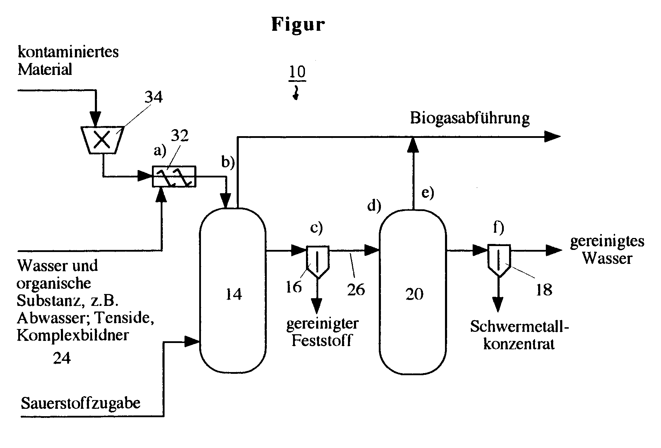

Die Figur zeigt ein schematisch dargestelltes Ablaufschaubild des erfindungsgemäßen Verfahrens. Weiterhin zeigt die Figur eine schematische Darstellung einer beispielhaften Ausgestaltung einer für das erfindungsgemäße Verfahren verwendeten Vorrichtung 10.

In einem ersten erfindungsgemäßen Verfahrensschritt a) werden eine oder mehrere biologisch abbaubare organische Substanzen 24 und Wasser in ein mit Schwermetallen kontaminiertes Material zugegeben. Die organische Substanz 24 besteht überwiegend aus Tensiden und/oder organisch belastetem Abwasser. Dabei können die Substanzen in einem Mischer 32 bereits vermengt werden.

In einer vorteilhaften Ausgestaltung des erfindungsgemäßen Verfahrens werden die kontaminierten Materialien vor der Zugabe abbaubarer organischer Substanzen und Wasser einem thermischen, mechanischen, chemischen oder biochemischen Zellaufschlußverfahren 34 unterzogen. Durch die Zerstörung der Zellen von Mikroorganismen des zu bearbeitenden biologischen Klärschlamms wird die nachfolgende Schwermetalltrennung erleichtert.

In einem zweiten erfindungsgemäßen Verfahrensschritt b) wird durch Mischen eine überwiegend homogene Suspension erzeugt. Da der Mischvorgang unter Sauerstoffabschluß ausgeführt wird, bilden sich mit Hilfe von Mikroorganismen aus der organischen Substanz 24 organischen Säuren, die ein Absenken des pH-Wertes der Suspension bewirken, wodurch sich die Löslichkeit der Schwermetalle erhöht. Damit ist gewährleistet, daß sich die Schwermetalle von dem kontaminierten Material lösen und in eine wässrige Phase 26 überführt werden können. Zur Beschleunigung des Abtrennvorganges können Wärmeenergie, Nährstoffe für die Mikroorganismen und/oder Faulschlamm zugeführt werden.

In einem bevorzugten Ausführungsbeispiel erfolgt das Absenken des pH-Wertes der Suspension gemäß dem Verfahrensschritt b) in einem Versäuerungsreaktor 14. Die Suspension wird dabei im Versäuerungsreaktor 14 mechanisch, pneumatisch oder hydraulisch durchmischt.

Durch eine Druckerhöhung im Versäuerungsreaktor 14 wird ein weiteres Absenken des pH-Wertes - falls erforderlich - zur Mobilisierung der Schwermetalle erreicht. Diese pH-Wertabsenkung ist auf die höhere Löslichkeit des von den Mikroorganismen gebildeten Kohlendioxids zurückzuführen.

Im Versäuerungsreaktor 14 werden unter überwiegend anaeroben Bedingungen Schwefelverbindungen zu Schwefelwasserstoff umgewandelt, die zu einer Fällung der gelösten Schwermetalle führen würden. Da dies im Verfahrensschritt b) noch nicht erwünscht ist, sollte die Schwefelwasserstoffbildung weitgehenst vermieden werden. Daher kann es sinnvoll sein, im Verfahrensschritt b) geringe Sauerstoffmengen, z.B. durch Luftsauerstoff in den Versäuerungsreaktor 14 einzubringen, da Sauerstoff die biologische Schwefelwasserstoffbildung unterbindet. Die Eintragung von ca. 0,5 Volumenprozent Luft bezogen auf den gesamten in den Versäuerungsreaktor eingetragenen Gasstrom kann dabei ausreichend sein, die Schwefelwasserstoffbildung zu verhindern.

In einem weiteren erfindungsgemäßen Verfahrensschritt c) wird das nunmehr überwiegend schwermetallfreie Material von der schwermetallhaltigen wässrigen Phase 26 abgetrennt. Die Abtrennung erfolgt in einer ersten Fest-Flüssig-Trennvorrichtung 16, die als Membranfilter ausgebildet ist. Es ist aber auch denkbar, die Abtrennung mittels einer Zentrifuge oder dergleichen durchzuführen.

In einem weiteren erfindungsgemäßen Verfahrensschritt d) wird die schwermetallhaltige wässrige Phase 26 in einen Biogasreaktor 20 eingeführt. In einer nicht dargestellten Ausgestaltung des erfindungsgemäßen Verfahrens werden der schwermetallhaltigen wässrigen Phase 26 schwefelhaltige Substanzen zugegeben. Die im folgenden Verfahrensschritt e) erfolgende Schwermetallabtennung beruht unter anderem auf der Bildung schwer löslicher Metallsulfide. Die Sulfide werden von anaeroben Mikroorganismen aus den zugeführten schwefelhaltigen Verbindungen erzeugt. Sind im Ausgangsmaterial, nämlich den zu dekontaminierenden Substanzen, nicht genügend derartige Schwefelverbindungen enthalten, wird erfindungsgemäß z.B. Schwefelsäure im Verfahrensschritt d) zugegeben.

In einem fünften erfindungsgemäßen Verfahrensschritt e) wird unter Sauerstoffabschluß die Löslichkeit der Schwermetalle in der wässrigen Phase 26 durch Erhöhung des pH-Wertes in der wässrigen Phase 26 mit Hilfe eines biologischen Abbaues der sich im Verfahrensschritt b) bildenden organischen Säuren im Biogasreaktor 20 erniedrigt. In einer bevorzugten Ausführungsform wird die im Verfahrensschritt d) zugegebene Schwefelsäure im Biogasreaktor 20 von den Mikroorganismen zu Schwefelwasserstoff umgewandelt, welcher wiederum mit den gelösten Schwermetallen schwer lösliche Metallsulfide bildet. Die beim Abbau der organischen Säuren 28 im Biogasreaktor 20 entstehenden Methangase werden abgeführt und können zur Energieerzeugung genutzt werden.

In einem weiteren erfindungsgemäßen Verfahrensschritt f) werden die schwerlöslichen Schwermetallverbindungen von der jetzt schwermetallfreien wässrigen Phase 26 in einer zweiten Fest-Flüssig-Trennvorrichtung 18 abgetrennt. Die zweite Fest-Flüssig-Trennvorrichtung 18 ist in einer bevorzugten Ausführungsform als Membranfilter ausgebildet. Es ist aber auch denkbar, die Abtrennung mittels einer Zentrifuge oder dergleichen durchzuführen.

In einem besonders bevorzugten Ausführungsbeispiel wird die im Verfahrensschritt f) abgetrennte wässrige Phase 26 der Suspension gemäß dem Verfahrensschritt a) wieder zugeführt. Dadurch ist gewährleistet, daß das erfindungsgemäße Verfahren einen minimalen Frischwasserverbrauch aufweist.

Dadurch das das erfindungsgemäße Verfahren kontinuierlich als auch diskontinuierlich ablaufen kann, ist eine optimale Auslastung der Vorrichtung 10 gewährleistet.

In einer weiteren Ausführungsform kann die im Verfahrensschritt f) abgetrennte wässrige Phase 26 dem Säuerungsreaktor 14 wieder zugeführt werden, wobei der wässrigen Phase 26 ein Oxidationsmittel zugegeben wird. Damit ist gewährleistet, daß anaerob nicht bzw. schwer abbaubare Soffe oxidiert werden und der biologischen Versäuerung zugänglich werden.

Weiterhin ist durch die Verwendung von Tensiden als organische Substanzen 24 gewährleistet, daß neben Schwermetallen auch organische Schadstoffe, z.B. Mineralölkohlenwasserstoffe (MKW), aus dem kontaminierten Material abgetrennt werden können. So werden die MKW durch die Tenside vom kontaminierten Material abgetrennt und gemäß dem Verfahrensschritt b) in der wässrigen Phase 26 emulgiert. Erst dadurch werden die MKW einem anaeroben mikrobiologischem Abbau zugänglich gemacht. Die Tenside werden in diesem Fall zusammen mit den MKW in organische Säuren umgewandelt und im Biogasreaktor 20 weitgehend vollständig abgebaut.

Der Versäuerungsreaktor 14 und der Biogasreaktor 20 sind vorzugsweise als Rohrreaktoren ausgebildet, wobei sie stehend oder liegend angeordnet sein können.

## Patentansprüche

1. Verfahren zur Abtrennung von Schwermetallen aus kontaminierten Materialien, insbesondere aus dispersen Feststoffen, Böden, organischen Abfällen, Klärschlamm und dergleichen,
**dadurch gekennzeichnet**, daß das Verfahren folgende Schritte umfaßt:
a) Zufuhr von abbaubarer organischer Substanz (24) und Wasser in das mit Schwermetallen kontaminierte Material;
b) Mischen der entstehenden Suspension unter Sauerstoffabschluß und Erhöhung der Löslichkeit der Schwermetalle durch Absenken des pH-Wertes der Suspension mittels der sich unter Sauerstoffabschluß mit Hilfe von Mikroorganismen aus der organischen Substanz (24) bildenden organischen Säuren (28) und Überführung der Schwermetalle in eine wässrige Phase (26);
c) Abtrennung des nunmehr überwiegend schwermetallfreien Materials von der schwermetallhaltigen wässrigen Phase (26);
d) Einbringen der schwermetallhaltigen wässrigen Phase (26) in einen Biogasreaktor (20);
e) Erniedrigung der Löslichkeit der Schwermetalle in der wässrigen Phase (26) durch biologischen Abbau der sich im Verfahrensschritt b) bildenden organischen Säuren (28) unter Sauerstoffausschluß im Biogasreaktor (20), wobei schwerlösliche Schwermetallverbindungen gebildet werden; und
f) Abtrennung der schwerlöslichen Schwermetallverbindungen von der jetzt schwermetallfreien wässrigen Phase (26).

2. Verfahren nach Anspruch 1,
**dadurch gekennzeichnet**, daß das Verfahren kontinuierlich ablaufen kann.

3. Verfahren nach Anspruch 1,
**dadurch gekennzeichnet**, daß das Verfahren diskontinuierlich ablaufen kann.

4. Verfahren nach wenigstens einem der vorhergehenden Ansprüche,
**dadurch gekennzeichnet**, daß das mit Schwermetallen kontaminierte Material vor dem Verfahrensschritt a) einem thermischen, mechanischen, chemischen oder biochemischen Zellaufschlußverfahren unterzogen wird.

5. Verfahren nach wenigstens einem der vorhergehenden Ansprüche,
**dadurch gekennzeichnet**, daß die im Verfahrensschritt a) zugeführte organische Substanz (24) biologisch abbaubar ist.

6. Verfahren nach Anspruch 5,
**dadurch gekennzeichnet**, daß die organische Substanz (24) aus Tensiden und/oder organisch belastetem Abwasser besteht.

7. Verfahren nach wenigstens einem der vorhergehenden Ansprüche,
**dadurch gekennzeichnet**, daß im Verfahrensschritt b) Wärmeenergie zugeführt wird und/oder eine Erhöhung des Druckes durchgeführt wird.

8. Verfahren nach wenigstens einem der vorhergehenden Ansprüche,
**dadurch gekennzeichnet**, daß im Verfahrensschritt b) Nährstoffe für Mikroorganismen zugegeben werden.

9. Verfahren nach wenigstens einem der vorhergehenden Ansprüche,
**dadurch gekennzeichnet**, daß die Erniedrigung des pH-Wertes der Suspension gemäß dem Verfahrensschritt b) in einem Versäuerungsreaktor (14) erfolgt.

10. Verfahren nach Anspruch 9,
**dadurch gekennzeichnet**, daß die Suspension im Versäuerungsreaktor (14) mechanisch, pneumatisch oder hydraulisch durchmischt wird.

11. Verfahren nach wenigstens einem der vorhergehenden Ansprüche,
**dadurch gekennzeichnet**, daß im Verfahrensschritt b) Sauerstoff zugegeben wird.

12. Verfahren nach wenigstens einem der vorhergehenden Ansprüche,
**dadurch gekennzeichnet**, daß im Verfahrensschritt b) und/oder e) Faulschlamm zugegeben wird.

13. Verfahren nach wenigstens einem der vorhergehenden Ansprüche,
**dadurch gekennzeichnet**, daß die Abtrennung des überwiegend schwermetallfreien Materials von der schwermetallhaltigen wässrigen Phase (26) gemäß dem Verfahrensschritt c) in einer ersten Fest-Flüssig-Trennvorrichtung (16) erfolgt.

14. Verfahren nach wenigstens einem der vorhergehenden Ansprüche,
**dadurch gekennzeichnet**, daß im Verfahrensschritt d) der schwermetallhaltigen wässrigen Phase schwefelhaltige Substanzen zugegeben werden.

15. Verfahren nach wenigstens einem der vorhergehenden Ansprüche,
**dadurch gekennzeichnet**, daß die Abtrennung der überwiegend schwermetallfreien wässrigen Phase (26) von den schwerlöslichen Schwermetallverbindungen gemäß dem Verfahrensschritt f) in einer zweiten Fest-Flüssig-Trennvorrichtung (18) erfolgt.

16. Verfahren nach wenigstens einem der vorhergehenden Ansprüche,
**dadurch gekennzeichnet**, daß die im Verfahrensschritt f) abgetrennte wässrige Phase (26) der Suspension gemäß dem Verfahrensschritt a) zugeführt wird.

17. Verfahren nach wenigstens einem der vorhergehenden Ansprüche,
**dadurch gekennzeichnet**, daß die im Verfahrensschritt f) abgetrennte wässrige Phase (26) dem Säuerungsreaktor (14) zugeführt wird.

18. Verfahren nach wenigstens einem der vorhergehenden Ansprüche,
**dadurch gekennzeichnet**, daß der Versäuerungsreaktor (14) und der Biogasreaktor (20) als Rohrreaktoren ausgebildet sind.

## Claims

1. A method of separating heavy metals from contaminated materials, in particular disperse solids, soils, organic wastes, sewage sludge and the like
**characterized by** the following steps:
a) Supplying decomposable organic substance (24) and water into the material contaminated with heavy metals;
b) Mixing the resulting suspension in the absence of oxygen and increasing the solubility of the heavy metals by reducing the pH value of the suspension by means of organic acids (28) forming from the organic substance (24) by means of microorganisms in the absence of oxygen and converting the heavy metals into an aqueous phase (26);
c) Separating the material now largely free of heavy metals from the aqueous phase (26) containing the heavy metals;
d) Feeding the aqueous phase (26) containing the heavy metals into a biogas reactor (20);
e) Reducing the solubility of the heavy metals in the aqueous phase (26) by biologically decomposing the organic acids (28) formed in step b) in the absence of oxygen in the biogas reactor (20), thus forming not readily soluble heavy metal compounds; and
f) Separating the not readily soluble heavy metal compounds from the aqueous phase (26) now free of heavy metals.

2. The method of claim 1
**characterized in that** the method may be conducted continuously.

3. The method of claim 1
**characterized in that** the method may be conducted discontinuously.

4. The method of at least one of the preceding claims
**characterized in that** the material contaminated with heavy metals is exposed to a thermal, mechanical, chemical or biochemical cell decomposing method prior to step a).

5. The method of at least one of the preceding claims
**characterized in that** the organic substance (24) added in step a) is biologically decomposable.

6. The method of claim 5
**characterized in that** the organic substance (24) consists of tensides and/or sewage containing organic waste.

7. The method of at least one of the preceding claims
**characterized in that** in step b) thermal energy is supplied and/or the pressure is increased.

8. The method of ate least one of the preceding claims
**characterized in that** nutrients for microorganisms are added in step b).

9. The method of at least one of the preceding claims
**characterized in that** the pH value of the suspension is reduced according to step b) in an acidification reactor (14).

10. The method of claim 9
**characterized in that** the suspension is thoroughly mixed mechanically, pneumatically or hydraulically in the acidification reactor (14).

11. The method of at least one of the preceding claims
**characterized in that** oxygen is added in step b).

12. The method of at least one of the preceding claims
**characterized in that** digested sludge is added in step b) and/or e).

13. The method of at least one of the preceding claims
**characterized in that** the material largely free of heavy metals is separated from the aqueous phase (26) containing the heavy metals according to step c) in a first solid-liquid separation device (16).

14. The method of at least one of the preceding claims
**characterized in that** sulphur-containing substances are added to the aqueous phase containing the heavy metals in step d).

15. The method of at least one of the preceding claims
**characterized in that** the aqueous phase (26) largely free of heavy metals is separated from the not readily soluble heavy metal compounds according to step f) in a second solid-liquid separation device (18).

16. The method of at least one of the preceding claims
**characterized in that** the aqueous phase (26) separated in step f) is added to the suspension according to step a).

17. The method of at least one of the preceding claims
**characterized in that** the aqueous phase (26) separated in step f) is supplied to the acidification reactor (14).

18. The method of at least one of the preceding claims
**characterized in that** the acidification reactor (14) and the biogas reactor (20) are in the form of tube reactors.

## Revendications

1. Procédé de séparation de métaux lourds à partir de matières contaminées, en particulier à partir de matières solides dispersées, de sols, de déchets organiques, de boues de curage et de matières similaires, caractérisé en ce qu'il comprend les étapes consistant :
a) à amener une substance organique dégradable (24) et de l'eau dans la matière contaminée par les métaux lourds;
b) à mélanger la suspension résultante, en l'absence d'oxygène et avec une élévation de la solubilité des métaux lourds résultant d'un abaissement de la valeur du pH de la suspension au moyen des acides organiques (28) se formant à partir de la matière organique (24), à l'aide de micro-organismes, en l'absence d'oxygène, et à transformer les métaux lourds en une phase aqueuse (26);
c) à séparer la matière exempte de métaux lourds, maintenant prédominante, de la phase aqueuse (26) contenant des métaux lourds;
d) à introduire la phase aqueuse (26) contenant des métaux lourds dans un réacteur à biogaz;
e) à abaisser la solubilité des métaux lourds dans la phase aqueuse (26) par une dégradation biologique des acides organiques se formant pendant l'étape b) du procédé, en l'absence d'oxygène, dans le réacteur à biogaz (10) de telle façon que des composés des métaux lourds difficilement solubles soient formés; et
f) à séparer les composés des métaux lourds difficilement solubles de la phase aqueuse (26) maintenant débarrassée des métaux lourds.

2. Procédé suivant la revendication 1 caractérisé en ce que le procédé peut être mis en oeuvre d'une manière continue.

3. Procédé suivant la revendication 1 caractérisé en ce que le procédé peut être mis en oeuvre d'une manière discontinue.

4. Procédé suivant l'une des revendications précédentes caractérisé en ce que la matière contaminée par les métaux lourds est soumise, avant l'étape a) du procédé, à un processus thermique, mécanique, chimique ou biochimique de désagrégation des cellules.

5. Procédé suivant l'une des revendications précédentes caractérisé en ce que la matière organique (24) fournie lors de l'étape a) du procédé est dégradable biologiquement.

6. Procédé suivant la revendication 5 caractérisé en ce que la matière organique (24) est constituée d'agents tensioactifs et/ou d'eau usée chargée en matière organique.

7. Procédé suivant l'une des revendications précédentes caractérisé en ce qu'au cours de l'étape b) du procédé on fournit de l'énergie calorifique et/ou on produit une élévation de la pression.

8. Procédé suivant l'une des revendications précédentes caractérisé en ce qu'au de l'étape b) du procédé on fournit des nutriments pour les micro-organismes.

9. Procédé suivant l'une des revendications précédentes caractérisé en ce qu'on réalise l'abaissement de la valeur du pH de la suspension, suivant l'étape b) du procédé, dans un réacteur d'acidification (14).

10. Procédé suivant la revendication 9 caractérisé en ce que la suspension dans le réacteur d'acidification (14) est mélangée mécaniquement, pneumatiquement ou hydrauliquement.

11. Procédé suivant l'une des revendications précédentes caractérisé en ce qu'on fournit de l'oxygène au cours de l'étape b) du procédé.

12. Procédé suivant l'une des revendications précédentes caractérisé en ce qu'on fournit de la boue de curage au cours de l'étape b) et/ou de l'étape e) du procédé.

13. Procédé suivant l'une des revendications précédentes caractérisé en ce que la séparation de la matière exempte de métaux lourds prédominante, à partir de la phase aqueuse (26) contenant des métaux lourds, suivant l'étape c) du procédé, a lieu dans un premier dispositif de séparation solide-liquide (16).

14. Procédé suivant l'une des revendications précédentes caractérisé en ce qu'au cours de l'étape d) du procédé on ajoute des matières contenant du soufre à la phase aqueuse (26) contenant des métaux lourds.

15. Procédé suivant l'une des revendications précédentes caractérisé en ce que la séparation de la phase aqueuse (26) contenant des métaux lourds, prédominante, à partir des composés de métaux lourds difficilement solubles, suivant l'étape f) du procédé, a lieu dans un second dispositif de séparation solide-liquide (18).

16. Procédé suivant l'une des revendications précédentes caractérisé en ce qu'au cours de l'étape a) du procédé on introduit, dans la suspension, la phase aqueuse séparée (26) suivant l'étape f) du procédé.

17. Procédé suivant l'une des revendications précédentes caractérisé en ce qu'on introduit dans le réacteur d'acidification (14) la phase aqueuse (26) séparée au cours de l'étape f) du procédé.

18. Procédé suivant l'une des revendications précédentes caractérisé en ce que le réacteur d'acidification (14) et le réacteur à biogaz (20) sont réalisés sous la forme de réacteurs tubulaires.
